(19) Europäisches Patentamt / European Patent Office / Office européen des brevets

(11) **EP 3 988 341 B1**

(12) **EUROPEAN PATENT SPECIFICATION**

(45) Date of publication and mention
of the grant of the patent:
**23.10.2024 Bulletin 2024/43**

(21) Application number: **20827926.5**

(22) Date of filing: **18.06.2020**

(51) International Patent Classification (IPC):
**B60C 13/00** *(2006.01)* **B60C 11/00** *(2006.01)*
**B60C 1/00** *(2006.01)* **B60C 11/03** *(2006.01)*

(52) Cooperative Patent Classification (CPC):
**B60C 11/0332; B60C 1/0025; B60C 13/00;**
B60C 2013/005; B60C 2013/006; Y02T 10/86

(86) International application number:
**PCT/JP2020/024034**

(87) International publication number:
**WO 2020/256082 (24.12.2020 Gazette 2020/52)**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2019 JP 2019114833**

(43) Date of publication of application:
**27.04.2022 Bulletin 2022/17**

(73) Proprietor: **BRIDGESTONE CORPORATION**
**Chuo-ku**
**Tokyo 104-8340 (JP)**

(72) Inventor: **KAWASHIMA Keisuke**
**Tokyo 104-8340 (JP)**

(74) Representative: **Marks & Clerk LLP**
**15 Fetter Lane**
**London EC4A 1BW (GB)**

(56) References cited:
**EP-A1- 0 554 108** **WO-A1-2016/098505**
**WO-A1-2018/003526** **CN-A- 104 311 908**
**JP-A- 2004 530 004** **JP-A- 2008 056 733**
**JP-A- 2017 218 496** **JP-A- 2018 083 944**
**JP-A- 2018 145 272** **JP-A- 2018 150 419**
**JP-A- H01 174 547** **US-A1- 2008 097 024**
**US-A1- 2008 097 024**

**Description**

TECHNICAL FIELD

The present invention relates to a tire.

BACKGROUND

There are known techniques that optimize rubber members forming sidewall portions of tires in order to improve the fuel efficiency of vehicles (i.e. achieve higher fuel efficiency).

For example, JP 2010-13553 A (PTL 1) discloses a technique relating to a sidewall rubber composition having improved (lower) heat generating property (i.e. reduced tan$\delta$) as a result of adjusting rubber components and fillers.

In the case where tan$\delta$ (loss tangent) of the sidewall rubber composition is reduced as in the tire disclosed in PTL 1, the rolling resistance is low (i.e. excellent rolling resistance) and the fuel efficiency can be improved, but noise (pass-by noise) generated from the tire during vehicle passing worsens.

There is thus a demand to develop a tire having excellent rolling resistance and improved pass-by noise performance.

CITATION LIST

Patent Literature

PTL 1: JP 2010-13553 A

A further document EP0554108 A1 refers to a pneumatic tire having a thickness of the sidewall of more than 1,0 mm, wherein the loss factor of the rubber composition of the sidewall is 0.15. This tire also improves the pass-by noise of said tire.

SUMMARY

(Technical Problem)

It could therefore be helpful to provide a tire having excellent rolling resistance and improved pass-by noise performance.

(Solution to Problem)

We provide the following:
A tire according to the present invention is a pneumatic tire comprising a side rubber provided on an outer side of a carcass in a tire width direction, in a sidewall portion, wherein a thickness of the side rubber in the tire width direction at a tire maximum width position is 1 mm or more, and a ratio 0 °C tan$\delta$/30 °C tan$\delta$ of 0 °C tan$\delta$ to 30 °C tan$\delta$ of the side rubber is 2.00 or more, where the 0 °C tan$\delta$ is tan$\delta$ at 10 Hz and 0 °C, and the 30 °C tan$\delta$ is tan$\delta$ at 10 Hz and 30 °C.

With this structure, the rolling resistance and the pass-by noise performance can be improved.

Preferably, in the tire according to the present invention, the thickness of the side rubber in the tire width direction at the tire maximum width position is 1 mm or more. The pass-by noise performance can thus be further improved.

Preferably, in the tire according to the present invention, a length of the side rubber in a tire radial direction is 20 mm or more. The pass-by noise performance can thus be further improved.

Preferably, in the tire according to the present invention, the ratio 0 °C tan$\delta$/30 °C tan$\delta$ is 2.25 or more. Both the rolling resistance and the pass-by noise performance can thus be improved at higher level.

Preferably, in the tire according to the present invention, the 30 °C tan$\delta$ is 0.140 or more. The pass-by noise performance of the tire can thus be further improved.

Preferably, in the tire according to the present invention, the 0 °C tan$\delta$ is 0.200 or more. The pass-by noise performance of the tire can thus be further improved.

Preferably, in the tire according to the present invention, a rectangular rate of a contact patch shape when the tire is attached to an applicable rim, filled to a prescribed internal pressure, and placed under a maximum load in a state in which a tire rotation axis is parallel to a contact patch is 70 % to 95 %. The rolling resistance can thus be further improved while maintaining the wear resistance.

(Advantageous Effect)

It is therefore possible to provide a tire having excellent rolling resistance and improved pass-by noise performance.

BRIEF DESCRIPTION OF THE DRAWINGS

In the accompanying drawings:

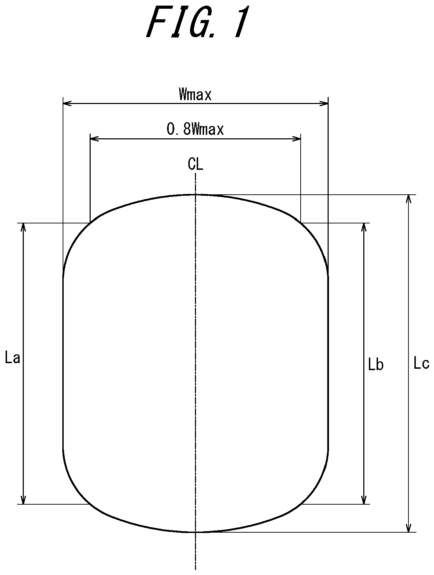

FIG. 1 is a plan view illustrating a contact patch shape of a tire for explaining a rectangular rate.

DETAILED DESCRIPTION

A tire according to the present invention will be described in detail below by way of embodiments.

A tire according to the present invention is a pneumatic tire comprising a side rubber provided on an outer side of a carcass in a tire width direction, in a sidewall portion.

In the tire according to the present invention, a thickness of the side rubber in the tire width direction at a tire maximum width position is 1 mm or more, and a ratio (0 °C tanδ/30 °C tanδ) of 0 °C tanδ to 30 °C tanδ of the side rubber is 2.00 or more, where 0 °C tanδ is tanδ at 10 Hz and 0 °C, and 30 °C tanδ is tanδ at 10 Hz and 30 °C and wherein a rubber composition for side rubber forming the side rubber comprises a rubber component containing 1 mass% to 50 mass% of styrene butadiene rubber (SBR) whose styrene content is 30 mass% or more, 10 mass% to 89 mass% of natural rubber (NR) and 10 mass% to 89 mass% of butadiene rubber (BR) and 25 parts by mass or more of carbon black with respect to 100 parts by mass of the rubber components.

Typically, in the case where tanδ of a side rubber is reduced, the rolling resistance of the tire can be improved, but the pass-by noise level worsens. Meanwhile, in the case where tanδ of the side rubber is increased or the thickness of the side rubber is increased, the pass-by noise level can be reduced, but the rolling resistance worsens.

In view of this, in addition to limiting the thickness of the side rubber provided on the outer side of the carcass in the tire width direction in the sidewall portion to the predetermined range, we looked at the frequency domain (about 800 Hz to 1200 Hz) of tanδ influencing the pass-by noise performance and the frequency domain (about 10 Hz to 20 Hz) of tanδ influencing the rolling resistance. We then learned that decreasing low-frequency tanδ tends to improve the rolling resistance of the tire, and increasing high-frequency tanδ contributes to improved pass-by noise performance.

Given that it is difficult to identify viscoelasticity at high frequency, we discovered that, by converting tanδ at 1000 Hz and 30 °C into tanδ at 10 Hz and 0 °C for the base rubber by temperature frequency conversion (WLF rule) and optimizing the frequency dependence of the rolling resistance and the pass-by noise performance (specifically, setting the ratio of tanδ at 10 Hz and 0 °C to tanδ at 10 Hz and 30 °C to a high ratio of 2.00 or more), the pass-by noise performance can be improved while ensuring excellent rolling resistance.

0 °C tanδ/30 °C tanδ of the side rubber needs to be 2.00 or more. If 0 °C tanδ/30 °C tanδ is less than 2.00, the frequency dependence of the rolling resistance and the pass-by noise performance cannot be optimized sufficiently, and therefore it is impossible to achieve both improvement of rolling resistance and reduction of pass-by noise.

From the same viewpoint, 0 °C tanδ/30 °C tanδ of the side rubber is preferably 2.25 or more, and more preferably 2.50 or more. If 0 °C tanδ/30 °C tanδ is excessively high, the rolling resistance cannot be reduced sufficiently. 0 °C tanδ/30 °C tanδ is therefore preferably 6.0 or less.

0 °C tanδ and 30 °C tanδ of the side rubber can be measured using a spectrometer produced by Ueshima Seisakusho Co., Ltd. The measurement method is, however, not limited as long as accurate values of 0 °C tanδ and 30 °C tanδ are obtained, and 0 °C tanδ and 30 °C tanδ may be measured using a typical measurement device.

30 °C tanδ of the side rubber is not limited as long as the foregoing relationship of 0 °C tanδ/30 °C tanδ is satisfied. For example, 30 °C tanδ of the side rubber is preferably 0.140 or more, from the viewpoint of further improving the pass-by noise performance of the tire. 30 °C tanδ of the side rubber is preferably 0.340 or less and more preferably 0.300 or less, from the viewpoint of further improving the rolling resistance of the tire.

0 °C tanδ of the side rubber is not limited as long as the foregoing relationship of 0 °C tanδ/30 °C tanδ is satisfied. For example, 0 °C tanδ of the side rubber is preferably 0.200 or more, from the viewpoint of further improving the pass-by noise performance of the tire. 0 °C tanδ of the side rubber is preferably 0.700 or less, more preferably 0.600 or less, and further preferably 0.550 or less, from the viewpoint of further improving the rolling resistance of the tire.

The method of adjusting the value of 0 °C tanδ/30 °C tanδ of the side rubber is not limited. For example, a method of optimizing the components of the rubber composition forming the side rubber (hereafter also referred to as "rubber composition for side rubber") may be used. The value of 0 °C tanδ/30 °C tanδ, the value of 0 °C tanδ, and the value of 30 °C tanδ can each be set to the range defined in the present invention by adjusting the types and contents of rubber components and/or the types and contents of fillers, as described later.

The thickness of the side rubber in the tire width direction at the tire maximum width position needs to be 1 mm or more, and is preferably 2 mm or more. The pass-by noise performance of the tire can thus be further improved.

The length of the side rubber in the tire radial direction is preferably 20 mm or more, and more preferably 35 mm or more. The pass-by noise performance of the tire can thus be further improved.

The components forming the rubber composition for side rubber are not limited as long as the side rubber satisfies the foregoing relationship of 0 °C tanδ/30 °C tanδ. The types and contents of the rubber components and fillers may be adjusted as appropriate depending on the performance required of the side rubber.

The components forming the tire according to the present invention are not limited as long as the foregoing relationship of 0 °C tanδ/30 °C tanδ is satisfied.

The types and contents of the rubber components and fillers may be adjusted as appropriate depending on the performance required of the sidewall portion.

The rubber components in the rubber composition for side rubber contain styrene butadiene rubber (SBR) whose styrene content is 30 mass% or more from the viewpoint of satisfying the foregoing relationship of 0 °C tanδ/30 °C tanδ and improving both the rolling resistance and the pass-by noise performance at higher level when used in the side rubber.

From the same viewpoint, the styrene content in SBR is more preferably 40 mass% or more.

The styrene content in SBR can be calculated based on the integral ratio of $^1$H-NMR spectra.

The content of SBR in the rubber components is preferably 1 mass% to 50 mass%, more preferably 5 mass% to 45 mass%, and further preferably 10 mass% to 40 mass%, from the viewpoint of improving both the rolling resistance and the pass-by noise performance at higher level when used in the side rubber. As a result of the content of SBR in the rubber components being 1 mass% to 50 mass%, the foregoing relationship of 0 °C tanδ/30 °C tanδ can be easily satisfied and both the rolling resistance and the pass-by noise performance can be improved at higher level when used in the side rubber.

The rubber components preferably further contain natural rubber (NR) in addition to SBR. Thus, the foregoing relationship of 0 °C tanδ/30 °C tanδ can be easily satisfied, and both the rolling resistance and the pass-by noise performance can be improved at higher level when used in the side rubber.

The rubber components preferably further contain butadiene rubber (BR) in addition to SBR and NR. Thus, the foregoing relationship of 0 °C tanδ/30 °C tanδ can be easily satisfied, and both the rolling resistance and the pass-by noise performance can be improved at higher level when used in the side rubber.

The rubber components preferably contain 10 mass% to 89 mass% of NR, 10 mass% to 89 mass% of BR, and 1 mass% to 50 mass% of SBR, from the viewpoint of more reliably improving both the rolling resistance and the pass-by noise performance when used in the side rubber.

Here, SBR, NR, and BR may be modified or unmodified.

The rubber components may contain other rubbers (other rubber components) besides the foregoing SBR, NR, and BR, depending on the required performance. Examples of the other rubber components include diene-based rubbers such as isoprene rubber (IR), styrene isoprene butadiene rubber (SIBR), chloroprene rubber (CR), and acrylonitrile butadiene rubber (NBR), and non-diene-based rubbers such as ethylene propylene diene rubber (EPDM), ethylene propylene rubber (EPM), and butyl rubber (IIR).

Whether the rubber composition for side rubber contains fillers, the contents and types of fillers, and the like are not limited, and may be changed as appropriate depending on the required performance.

Examples of fillers that may be contained include carbon black, silica, and other inorganic fillers.

The type of carbon black is not limited, and may be selected as appropriate depending on the required performance. Examples of carbon black that may be contained include FEF, SRF, HAF, ISAF, and SAF grade carbon blacks.

The content of carbon black in the rubber composition for side rubber is preferably 25 parts to 65 parts by mass and more preferably 30 parts to 45 parts by mass, with respect to 100 parts by mass of the rubber components. As a result of the content of carbon black being 25 parts by mass or more with respect to 100 parts by mass of the rubber components, higher reinforcement and crack propagation resistance can be achieved. As a result of the content of carbon black being 65 parts by mass or less with respect to 100 parts by mass of the rubber components, degradation in rolling resistance can be suppressed.

Examples of types of silica include wet silica, colloidal silica, calcium silicate, and aluminum silicate.

Of these, wet silica is preferable, and precipitated silica is more preferable. These silicas have high dispersibility, and can reduce the rolling resistance of the tire. Precipitated silica is silica obtained by allowing a reaction solution to react in a relatively high temperature and neutral to alkaline pH region in the initial stage of production to grow silica primary particles and then controlling the reaction solution to the acidic side to aggregate the primary particles.

The rubber composition for side rubber optionally contains silica in the present disclosure. In the case where silica is contained, the content of silica is preferably 1 part to 60 parts by mass with respect to 100 parts by mass of the rubber components. As a result of the content of silica being 1 part by mass or more with respect to 100 parts by mass of the rubber components, the reinforcement can be further improved and the rolling resistance can be reduced. As a result of the content of silica being 60 parts by mass or less, degradation in processability can be suppressed.

Examples of the other inorganic fillers include alumina ($Al_2O_3$) such as $\gamma$-alumina and $\alpha$-alumina, alumina monohydrate ($Al_2O_3 \cdot H_2O$) such as boehmite and diaspore, aluminum hydroxide [$Al(OH)_3$] such as gibbsite and bayerite, aluminum carbonate [$Al_2(CO_3)_3$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium Oxide (CaO), calcium hydroxide [$Ca(OH)_2$], aluminum magnesium oxide ($MgO$-$Al_2O_3$), clay ($Al_2O_3 \cdot 2SiO_2$), kaolin ($Al_2O_3$-$2SiO_2$-$2H_2O$), pyrophyllite ($Al_2O_3 \cdot 4SiO_2 \cdot H_2O$), bentonite ($Al_2O_3$-$4SiO_2 \cdot 2H_2O$), aluminum silicate ($Al_2SiO_5$, $Al_4 \cdot 3SiO_4 \cdot 5H_2O$, etc.), magnesium silicate ($Mg_2SiO_4$, $MgSiO_5$, etc.), calcium silicate ($Ca_2SiO_4$, etc.), aluminum calcium silicate ($Al_2O_3 \cdot CaO \cdot 2SiO_2$, etc.), magnesium calcium silicate ($CaMgSiO_4$), calcium carbonate ($CaCO_3$), zirconium oxide ($ZrO_2$), zirconium hydroxide [$ZrO(OH)_2$-$nH_2O$], zirconium carbonate [$Zr(CO_3)_2$], and crystalline aluminosilicate salts containing charge-correcting hydrogen, alkali metal, or alkaline earth metal such as various types of zeolite.

The rubber composition for side rubber may further contain resin.

Examples of the resin include C5-based resin, C5/C9-based resin, C9-based resin, phenol resin, terpene-based resin, and terpene-aromatic compound-based resin. These resins may be used alone or in combination of two or more.

The rubber composition for side rubber may contain other components besides the foregoing rubber components, fillers, resins, etc. to such an extent that will not impair the effects according to the present invention.

Examples of the other components include additives commonly used in the rubber industry, such as a silane coupling agent, a softener, stearic acid, an age resistor, a vulcanizing agent (sulfur, etc.), a vulcanization accelerator, and a vulcanization acceleration aid.

In the case where the rubber composition for side rubber contains silica as a filler, the rubber composition for side rubber preferably further contains a silane coupling agent. This further improves the effect of reinforcement and rolling resistance reduction by silica. A known silane coupling agent may be used as appropriate.

The age resistor is not limited, and may be a known age resistor. Examples include a phenol-based age resistor, an imidazole-based age resistor, and an amine-based age resistor. One or more of these age resistors may be used.

The vulcanization accelerator is not limited, and may be a known vulcanization accelerator. Examples include thiazole-based vulcanization accelerators such as 2-mercaptobenzothiazole, dibenzothiazyl disulfide, and di-2-benzothiazolyl disulfide; sulfenamide-based vulcanization accelerators such as N-cyclohexyl-2-benzothiazyl sulfenamide and N-t-butyl-2-benzothiazyl sulfenamide; guanidine-based vulcanization accelerators such as diphenyl guanidine (1,3-diphenyl guanidine, etc.); thiuram-based vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate-based vulcanization accelerators such as zinc dimethyldithiocarbamate; and zinc dialkyldithio phosphate.

Examples of the vulcanization acceleration aid include zinc oxide (ZnO) and a fatty acid. The fatty acid may be any of saturated, unsaturated, linear, and branched fatty acids. The carbon number of the fatty acid is not limited. For example, a fatty acid with a carbon number of 1 to 30 may be used, and a fatty acid with a carbon number of 15 to 30 is preferable. More specific examples include naphthenic acids such as cyclohexanoic acid (cyclohexanecarboxylic acid) and alkylcyclopentane having a side chain; saturated fatty acids such as hexanoic acid, octanoic acid, decanoic acid (including a branched carboxylic acid such as neodecanoic acid), dodecanoic acid, tetradecanoic acid, hexadecanoic acid, and octadecanoic acid (stearic acid); unsaturated fatty acids such as methacrylic acid, oleic acid, linoleic acid, and linolenic acid; and resin acids such as rosin, toll oil acid, and abietic acid. These fatty acids may be used alone or in combination of two or more. In the present disclosure, zinc oxide and stearic acid can be suitably used.

The tire according to the present invention is preferably a pneumatic tire. The pneumatic tire may be filled with ordinary air or air with an adjusted partial pressure of oxygen, or may be filled with an inert gas such as nitrogen, argon, or helium.

The rectangular rate of the contact patch shape when the tire according to the present invention is attached to an applicable rim, filled to a prescribed internal pressure, and placed under a maximum load in a state in which the tire rotation axis is parallel to the road surface is preferably 70 % to 95 %, and more preferably 80 % to 90 %. As a result of the rectangular rate being 70 % or more, favorable wear resistance can be maintained. As a result of the rectangular rate being 95 % or less, the rolling resistance can be further improved.

The rectangular rate of the contact patch shape is calculated according to the following equation:

rectangular rate of contact patch shape (%) $= 100 \times ((La + Lb)/2)/Lc$

where Lc is the contact patch length in the part corresponding to the tire equatorial plane CL and La and Lb are the contact patch lengths at the left and right positions of 80 % of the contact patch shape maximum width Wmax with respect to the tire equatorial plane CL when the pneumatic tire is attached to an approved rim, filled to an approved air pressure, and grounded under a maximum load (maximum load capability) in a state in which the tire rotation axis is parallel to the road surface, as illustrated in FIG. 1.

The rectangular rate may be changed as appropriate depending on, for example, the curvature of the outer surface of the tread portion in a sectional view of the pneumatic tire along the rotation axis, the thickness distribution of the tread rubber, and the belt structure or width.

Herein, the "applicable rim" is an approved rim ("measuring rim" in ETRTO Standards Manual, "design rim" in TRA Year Book) in applicable size that is described or will be described in the future in an effective industrial standard in areas where tires are produced or used, such as JATMA (Japan Automobile Tyre Manufacturers Association) Year Book in Japan, ETRTO (European Tyre and Rim Technical Organisation) Standards Manual in Europe, or TRA (Tire and Rim Association, Inc.) Year Book in the United States (The "applicable rim" thus includes not only current size but also a size that may be included in the industrial standard in the future. An example of the "size that will be described in the future" is the size described as "future developments" in ETRTO 2013 edition). In the case of a size not described in the industrial standard, the "applicable rim" refers to a rim whose width corresponds to the bead width of the tire.

The "prescribed internal pressure" is the air pressure (maximum air pressure) corresponding to the maximum load capability of a single wheel in applicable size/ply rating that is described in JATMA Year Book, etc. In the case of a size not described in the aforementioned industrial standard, the "prescribed internal pressure" denotes the air pressure (maximum air pressure) corresponding to the maximum load capability defined for each vehicle on which the tire is to be mounted. The "maximum load" is the load corresponding to the maximum load capability.

The tire according to the present invention may be used as a tire for any of various types of vehicles, but is preferably used as a passenger vehicle tire or a truck/bus tire. These vehicles are highly required to achieve both rolling resistance reduction and pass-by noise improvement, and benefit from using the tire according to the present invention

In the tire according to the present invention, the same rubber as the foregoing side rubber may be used in a rubber chafer. Such a rubber chafer has the same features as the foregoing side rubber.

EXAMPLES

The presently disclosed techniques will be described in more detail below by way of examples, although the present invention is not limited to the following examples.

<Examples 1 to 3, Comparative Example 1>

Rubber compositions for side rubber A and B were produced using a typical Banbury mixer according to the formulations shown in Table 1. The blending amount of each component in Table 1 is expressed in parts by mass with respect to 100 parts by mass of the rubber components.

The obtained rubber compositions for side rubber A and B were vulcanized at 160 °C for 15 min. For each of the resultant vulcanized rubbers, loss tangent (tan$\delta$) at 0 °C and 30 °C was measured under the conditions of an initial strain of 2 %, a dynamic strain of 1 %, and a frequency of 10 Hz using a spectrometer produced by Ueshima Seisakusho Co., Ltd. The measured tan$\delta$ at 0 °C and 30 °C and the calculated 0 °C tan$\delta$/30 °C tan$\delta$ are shown in Table 2.

[Table 1]

| Composition for side rubber | A | B |
| --- | --- | --- |
| Natural rubber | 40 | 40 |
| Butadiene rubber *1 | 60 | 40 |
| Styrene butadiene rubber *2 | - | 20(26.8) |
| Carbon black *3 | 35 | 35 |
| Resin *4 | - | 6 |
| Oil *5 | 5 | - |
| Zinc oxide *6 | 3 | 3 |
| Wax *7 | 2 | 2 |
| Age resistor 1 *8 | 1 | 2 |
| Age resistor 2 *9 | 3 | 3 |
| Vulcanization accelerator 1 *10 | 0.6 | 0.5 |
| Vulcanization accelerator 2 *11 | - | 0.3 |

(continued)

| Composition for side rubber | A | B |
|---|---|---|
| Sulfur | 2 | 2 |

*1: "BR01" produced by JSR Corporation.

*2: "T0150" produced by JSR Corporation, styrene content: 46 mass%. The value in the parentheses in Table 1 is the blending amount (parts by mass) as oil extended rubber containing extender oil.

*3: "Asahi #65" produced by Asahi Carbon Co., Ltd.

*4: "Quintone G100" produced by Zeon Corporation.

*5: "A/O MIX" produced by JXTG Nippon Oil & Energy Corporation.

*6: "Two kinds of zinc oxide" produced by Mitsui Mining & Smelting Co., Ltd.

*7: "OZOACE 0355" produced by Nippon Seiro Co., Ltd.

*8: 2,2,4-trimethyl-1,2-dihydroquinoline polymer, "NOCRAC 224" produced by Ouchi Shinko Chemical Industrial Co., Ltd.

*9: N-(1,3-dimethylbutyl)-N'-phenyl-p-phenylenediamine, "NOCRAC 6C" produced by Ouchi Shinko Chemical Industrial Co., Ltd.

*10: N-cyclohexyl-2-benzothiazolylsulfenamide, "NOCCELER® CZ-G" (NOCCELER is a registered trademark in Japan, other countries, or both) produced by Ouchi Shinko Chemical Industrial Co., Ltd.

*11: di-2-benzothiazolyl disulfide, "NOCCELER® DM-P" produced by Ouchi Shinko Chemical Industrial Co., Ltd.

Subsequently, samples of passenger vehicle pneumatic radial tires of 195/65R15 in size were produced using, in their sidewall portions, the obtained rubber compositions for side rubber. The conditions other than the conditions of the side rubber used in the sidewall portion were the same in all samples.

<Evaluation>

The obtained tire samples were evaluated by the following methods. The results are shown in Table 2.

(1) Rolling resistance

For each tire sample, the rolling resistance coefficient (RRC) was measured in accordance with international standards (ECE R117).

In the evaluation, the inverse of the measured RRC was calculated and expressed as an index where the inverse of the RRC in Comparative Example 1 was 100. A larger index value indicates better rolling resistance (i.e. greater reduction in rolling resistance). The evaluation results are shown in Table 2.

(2) Pass-by noise level

For each tire sample, the pass-by noise (dB) was measured in accordance with international standards (ECE R117).

In the evaluation, the difference in noise level from the pass-by noise (dB) in Comparative Example 1 was calculated and taken to be a pass-by noise level. A lower pass-by noise level indicates greater reduction in pass-by noise. The evaluation results are shown in Table 2.

[Table 2]

|  |  | Comparative Example 1 | Example 1 | Example 2 | Example 3 |
|---|---|---|---|---|---|
| Conditions of side rubber | Rubber composition for side rubber | A | B | B | B |
|  | 0°Ctanδ | 0.169 | 0.394 | 0.394 | 0.394 |
|  | 30°Ctanδ | 0.134 | 0.157 | 0.157 | 0.157 |
|  | 0°Ctanδ/30°Ctanδ | 1.26 | 2.51 | 2.51 | 2.51 |
|  | Thickness in tire width direction at tire maximum width position | 2mm | 2mm | 1mm | 2mm |
|  | Length in tire radial direction | 35mm | 35mm | 35mm | 20mm |
| Evaluation | Rolling resistance (larger value is better) | 100 | 100 | 103 | 102 |
|  | Pass-by noise level (smaller value is better) | Reference value | -0.3dB | -0dB | -0dB |

As can be understood from the results in Table 2, the samples of Examples 1 to 3 exhibited excellent effects in both rolling resistance and pass-by noise level in a balanced manner, as compared with the sample of Comparative Example 1.

The sample of Comparative Example 1 was inferior in pass-by noise level to Example 1, and inferior in rolling resistance to Examples 2 and 3.

INDUSTRIAL APPLICABILITY

It is thus possible to provide a tire having excellent rolling resistance and improved pass-by noise performance.

## Claims

1. A tire being a pneumatic tire comprising

   a side rubber provided on an outer side of a carcass in a tire width direction, in a sidewall portion,
   wherein a thickness of the side rubber in the tire width direction at a tire maximum width position is 1 mm or more, and a ratio 0 °C tanδ/30 °C tanδ of 0 °C tanδ to 30 °C tanδ of the side rubber is 2.00 or more, where the 0 °C tanδ is tanδ at 10 Hz and 0 °C, and the 30 °C tanδ is tanδ at 10 Hz and 30 °C, and
   wherein a rubber composition forming the side rubber comprises a rubber component containing 1 mass% to 50 mass% of styrene butadiene rubber (SBR) whose styrene content is 30 mass% or more, 10 mass% to 89 mass% of natural rubber (NR) and 10 mass% to 89 mass% of butadiene rubber (BR), and 25 parts by mass or more of carbon black with respect to 100 parts by mass of the rubber components.

2. The tire according to claim 1, wherein a length of the side rubber in a tire radial direction is 20 mm or more.

3. The tire according to claim 1 or 2, wherein the ratio 0 °C tanδ/30 °C tanδ is 2.25 or more.

4. The tire according to any one of claims 1 to 3, wherein the 30 °C tanδ is 0.140 or more.

5. The tire according to any one of claims 1 to 4, wherein the 0 °C tanδ is 0.200 or more.

6. The tire according to any one of claims 1 to 5, wherein a rectangular rate of a contact patch shape when the tire is attached to an applicable rim, filled to a prescribed internal pressure, and placed under a maximum load in a state in which a tire rotation axis is parallel to a contact patch is 70 % to 95 %,

   wherein a rectangular rate of the contact patch shape is calculated according to the following equation:

$$\text{rectangular rate of contact patch shape (\%)} = 100 \times ((La+Lb)/2)/Lc$$

where Lc is the contact patch length in the part corresponding to the tire equatorial plane CL and La and Lb are the contact patch lengths at the left and right positions of 80% of the contact patch shape maximum width Wmax with respect to the tire equatorial plane CL when the pneumatic tire is attached to an approved rim, filled to an approved air pressure, and grounded under a maximum load in a state in which the tire rotation axis is parallel to the road surface.

**Patentansprüche**

1. Reifen, der ein Luftreifen ist, der Folgendes umfasst

   einen Seitenkautschuk, der auf einer Außenseite einer Karkasse in einer Reifenbreitenrichtung in einem Seitenwandabschnitt bereitgestellt ist,
   wobei eine Dicke des Seitenkautschuks in der Reifenbreitenrichtung an einer Position von maximaler Reifenbreite 1 mm oder mehr beträgt, und ein Verhältnis 0 °C tan$\delta$/30 °C tan$\delta$ von 0 °C tan$\delta$ zu 30 °C tan$\delta$ des Seitenkautschuks 2,00 oder mehr beträgt, wo der 0 °C tan$\delta$ tan$\delta$ bei 10 Hz und 0 °C ist, und der 30 °C tan$\delta$ tan$\delta$ bei 10 Hz und 30 °C ist, und
   wobei eine Kautschukzusammensetzung, die den Seitenkautschuk bildet, eine Kautschukkomponente umfasst, die 1 Massen-% bis 50 Massen-% Styrol-Butadien-Kautschuk (SBR), dessen Styrolgehalt 30 Massen-% oder mehr beträgt, 10 Massen-% bis 89 Massen-% Naturkautschuk (NR) und 10 Massen-% bis 89 Massen-% Butadien-Kautschuk (BR), und 25 Masseteile oder mehr Ruß in Bezug auf 100 Masseteile der Kautschukkomponenten enthält.

2. Reifen nach Anspruch 1, wobei eine Länge des Seitenkautschuks in einer Reifenradialrichtung 20 mm oder mehr beträgt.

3. Reifen nach Anspruch 1 oder 2, wobei das Verhältnis 0 °C tan$\delta$/30 °C tan$\delta$ 2,25 oder mehr beträgt.

4. Reifen nach einem der Ansprüche 1 bis 3, wobei der 30 °C tan$\delta$ 0,140 oder mehr beträgt.

5. Reifen nach einem der Ansprüche 1 bis 4, wobei der 0 °C tan$\delta$ 0,200 oder mehr beträgt.

6. Reifen nach einem der Ansprüche 1 bis 5, wobei eine rechteckige Rate einer Aufstandsflächenform, wenn der Reifen an einer anwendbaren Felge angebracht ist, bis zu einem vorgeschriebenen Innendruck gefüllt und unter eine maximale Last in einem Zustand gesetzt ist, in dem eine Reifendrehachse parallel zu einer Aufstandsfläche ist, 70 % bis 95 % beträgt,

   wobei eine rechteckige Rate der Aufstandsflächenform nach der folgenden Gleichung berechnet wird:

$$\text{rechteckige Rate der Aufstandsflächenform (\%)} = 100 \times ((La+Lb)/2)/Lc,$$

   worin Lc die Aufstandsflächenlänge in dem Teil ist, der der Reifenäquatorebene CL entspricht, und La und Lb die Aufstandsflächenlängen an der linken und der rechten Position von 80 % der maximalen Breite Wmax der Aufstandsflächenform in Bezug auf die Reifenäquatorebene CL, wenn der Luftreifen an einer genehmigten Felge angebracht ist, bis zu einem genehmigten Luftdruck gefüllt und unter eine maximale Last bei Bodenberührung in einem Zustand gesetzt ist, in dem die Reifendrehachse parallel zur Straßenoberfläche ist.

**Revendications**

1. Pneumatique étant un bandage pneumatique comprenant

   un caoutchouc latéral fourni sur un côté extérieur d'une carcasse dans une direction de la largeur de pneumatique, dans une portion de flanc,

dans lequel une épaisseur du caoutchouc latéral dans la direction de la largeur de pneumatique à une position de largeur maximale de pneumatique est de 1 mm ou plus, et un rapport tanô à 0 °C/tan8 à 30 °C de tanô à 0 °C à tanô à 30 °C du caoutchouc latéral est de 2,00 ou plus, où la tanô à 0 °C est la tan$\delta$ à 10 Hz et à 0 °C, et la tan$\delta$ à 30 °C est la tan$\delta$ à 10 Hz et à 30 °C, et

dans lequel une composition de caoutchouc formant le caoutchouc latéral comprend un composant de caoutchouc contenant 1 % en masse à 50 % en masse de caoutchouc styrène-butadiène (SBR) dont la teneur en styrène est de 30 % en masse ou plus, 10 % en masse à 89 % en masse de caoutchouc naturel (NR) et 10 % en masse à 89 % en masse de caoutchouc butadiène (BR), et 25 parties en masse ou plus de noir de carbone par rapport à 100 parties en masse des composants de caoutchouc.

2.  Pneumatique selon la revendication 1, dans lequel une longueur du caoutchouc latéral dans une direction radiale de pneumatique est de 20 mm ou plus.

3.  Pneumatique selon la revendication 1 ou 2, dans lequel le rapport tanô à 0 °C/tan8 à 30 °C est de 2,25 ou plus.

4.  Pneumatique selon l'une quelconque des revendications 1 à 3, dans lequel la tanô à 3 0 °C est de 0,140 ou plus.

5.  Pneumatique selon l'une quelconque des revendications 1 à 4, dans lequel la tanô à 0 °C est de 0,200 ou plus.

6.  Pneumatique selon l'une quelconque des revendications 1 à 5, dans lequel un taux rectangulaire d'une forme de surface de contact lorsque le pneumatique est fixé à une jante applicable, gonflé à une pression interne prescrite, et soumis à une charge maximale dans un état dans lequel un axe de rotation de pneumatique est parallèle à une surface de contact est de 70 % à 95 %,

dans lequel un taux rectangulaire de la forme de surface de contact est calculé selon l'équation suivante :

$$\text{taux rectangulaire de la forme de surface de contact (\%)} = 100 \times ((La+Lb)/2)/Lc,$$

où Lc est la longueur de surface de contact dans la partie correspondant au plan équatorial CL du pneumatique et La et Lb sont les longueurs de surface de contact aux positions gauche et droite de 80 % de la largeur maximale Wmax de la forme de surface de contact par rapport au plan équatorial CL du pneumatique lorsque le bandage pneumatique est fixé à une jante approuvée, gonflé à une pression d'air approuvée, et lors du contact avec le sol soumis à une charge maximale dans un état dans lequel l'axe de rotation de pneumatique est parallèle à la surface de roulement.

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010013553 A

- EP 0554108 A1